# EUROPEAN PATENT APPLICATION

(11) **EP 4 183 568 A1**
(43) Date of publication of application: **24.05.2023**
(21) Application number: 22208268.7
(22) Date of filing: 18.11.2022
(51) Int. Cl.: B32B 5/02, B32B 5/26, B32B 7/08, D04H 1/46, F16D 69/02, B32B 5/06, B32B 5/08, B32B 7/09, B32B 38/00, D04H 1/4242, D04H 1/498, B29B 11/16, F16D 65/12

(54) **METHOD FOR MAKING A FIBROUS PREFORM OF CARBON AND/OR FIBRES OF A CARBON PRECURSOR OF PRE-SET HEIGHT AND PREFORM DIRECTLY FORMED**

(30) Priority: 23.11.2021 IT 202100029540
(71) Applicant: Brembo SGL Carbon Ceramic Brakes S.p.A., 24040 Stezzano (BG) (IT)
(72) Inventor: ORLANDI, Marco, 20831 Seregno (MB) (IT); CARNEVALI, Guido, 21057 Olgiate Olona (VA) (IT)
(74) Representative: Fabiano, Piero

(57) **Abstract**

A method is described for making a fibrous preform (1) of pre-set height (N) of carbon and/or fibres of a carbon precursor comprising a number (n) of layers (3',3",....,3ⁿ) of carbon fibres and/or fibres of a carbon precursor and the respective preform formed.

The method comprises:
- a step a) of providing at least one first layer (3') of carbon fibres and/or fibres of a carbon precursor;
- a step b) of superimposing at least one second layer (3") of carbon fibres and/or fibres of a carbon precursor according to a pre-set superimposition axis (Z);
- a step c) of needle-felting, by at least one needle-felting device (10), said first (3') and said second (3") superimposed layers in a needle-felting direction substantially parallel to said superimposition axis (Z) to arrange at least part of the fibres parallel to the superimposition axis (Z), said needle-felting device (10) having a plurality of needles equipped with a penetration dimension (p);
- a step d) of repeating steps a-c until a needle-punched multilayer pre-body (2^{N}) of pre-set height N is formed;
- a step e) of superimposing a further layer of carbon fibres (3ⁿ⁺¹) and/or fibres of a carbon precursor according to said pre-set superimposition axis (Z);
- a step f) of needle-felting, by at least said needle-felting device (10), said further layer (3ⁿ⁺¹) of carbon and/or fibres of a carbon precursor superimposed together with the underlying layers along a needle-felting direction substantially parallel to said superimposition axis (Z) to arrange at least part of the fibres parallel to the superimposition axis (Z),
- a step g) of repeating steps e, f until forming a needle-punched multilayer pre-body (2^{N+p}) of at least N+p height,
- a step h) of cutting said needle-punched multilayer pre-body (2^{N+p}) of at least N+p height, at height N, making two multilayer bodies, a first (2') and a second (2") multilayer body, respectively; said first multilayer body having height N.

## Description

### Field of the invention

The present invention refers to a method for making a fibrous preform for brake discs and the fibrous preform directly formed.

### Known art

The following documents describe some examples of methods for making a preform or shaped materials for brake discs: WO2019180550 and WO2016/199021.

### Summary of the invention

As is known, in the aeronautical field and in the field of racing cars, braking systems are made using carbon/carbon (C/C) components, in particular rotors/stators and disc brakes.

Carbon/carbon components consist of a carbon matrix in which carbon reinforcement fibres are arranged.

Typically, carbon fibre or carbon precursor is aggregated (alone or by using binders, e.g. resins) to form a three-dimensional structure referred to as "preform".

The most used carbon precursors are PAN, pitch and rayon.

The carbonaceous matrix can be formed in various ways, essentially falling into two categories: by resin and/or pitch impregnation of the fibrous structure or by gas (CVI, "Chemical Vapour Impregnation" or "Chemical Vapour Infiltration").

The presence of additives added in specific steps of the production process can be provided in order to improve the intermediate manufacturability or the characteristics of the final product, such as coefficient of friction and/or wear resistance.

Among the various methods for the production of preforms of carbon fibre, the following can be mentioned:
- impregnation and/or moulding of short fibres (chop) with resins;
- impregnation and/or moulding of woven or non-woven felts with resins;
- needle-felting of non-woven felts, possibly enriched with continuous fibres;
- needle-felting of short fibres (chop);
- needle-felting of carbonaceous fabrics or carbon precursors;
- sewing of fabrics.

As is well known, some of the crucial characteristics of the finished brake disc formed from a carbon fibre preform, depend heavily on the way the preform is made.

In particular, characteristics such as compressive strength/stiffness along the disc's axis of rotation Z (orthogonal to the disc plane), shear strength with respect to the disc plane and thermal conductivity along the axis Z are strongly dependent on the quantity and distribution of fibres directed along the axis Z. At the same time, the quantity, fibre distribution and number of layers on the disc plane strongly influence final characteristics such as bending strength and thermal conductivity on the disc plane.

The Applicant has noticed that, normally, production methods based on impregnation/moulding involve the almost total absence of fibres along the axis Z, resulting in very poor values of the characteristics described above.

Typically, these production methods are adopted for their low cost and ease of production, but the technical and qualitative end result is definitely poor.

The Applicant has also noticed that alternative production methods, such as sewing, involve a limited presence of fibres along the axis Z, which, moreover, are not very evenly distributed.

The Applicant has also noticed that methods such as needle-felting allow the fibres to be distributed more effectively on the axis Z.

However, the Applicant has noticed that with the needle-felting methods in which the preform consists of several superimposed layers, the distribution of the fibres on the axis Z does not appear homogeneously distributed in all layers.

In particular, the Applicant has observed that with the needle-felting methods, the last superimposed layers of the preform, i.e. those furthest away from the supporting surface used for making the preform, have a significant decrease in density of the fibres arranged along the axis Z.

To date, therefore, there is no method in the known art for the manufacture of preforms of carbon fibres which allows to distribute the fibres in a controlled and homogeneous way both on the main plane of the preform and orthogonally thereto.

Therefore, the Applicant has raised the problem of implementing a method for the manufacture of preforms of carbon fibres or fibres of a carbon precursor which has a substantially homogeneous distribution of the fibres arranged along the axis Z substantially across the entire height of the same preform.

In a first aspect, the invention thus refers to a method for making a fibrous preform of a pre-set height of carbon and/or fibres of a carbon precursor, comprising a given number of layers of carbon fibres and/or fibres of a carbon precursor, comprising:
- a step a) of providing at least one first layer of carbon fibres and/or fibres of a carbon precursor;
- a step b) of superimposing at least one second layer of carbon fibres and/or fibres of a carbon precursor according to a pre-set superimposition axis;
- a step c) of needle-felting, by at least one needle-felting device, said first and said second superimposed layers in a needle-felting direction substantially parallel to said superimposition axis to arrange at least part of the fibres parallel to the superimposition axis, said needle-felting device having a plurality of needles equipped with a penetration dimension;
- a step d) of repeating steps a-c until a needle-punched multilayer pre-body of pre-set height N is formed;
- a step e) of superimposing a further layer of carbon fibres and/or fibres of a carbon precursor according to said pre-set superimposition axis;
- a step f) of needle-felting, by at least said needle-felting device, said further layer of carbon and/or fibres of a carbon precursor superimposed together with the underlying layers along a needle-felting direction substantially parallel to said superimposition axis to arrange at least part of the fibres parallel to the superimposition axis,
- a step g) of repeating steps e), f) until forming a needle-punched multilayer pre-body of at least N+p height,
- a step h) of cutting said needle-punched multilayer pre-body of at least N+p height, at height N, making two multilayer bodies, a first and a second multilayer body, respectively.

Thanks to these characteristics, the Applicant has verified that the preform of height N made with the method of the invention has a substantially homogeneous distribution of the fibres in all layers.

For the purposes of the present invention, the following definitions apply:
"Woven sub-layer" means a layer of material having an ordered arrangement of the fibres, wherein the fibres are all arranged substantially on the same plane.
"Non-woven sub-layer" means a layer of material mainly consisting of short fibres arranged randomly.
"Short fibre" means a fibre of a pre-set/discrete length.

In this description, unless otherwise specified, the terms "radial", "axial", "angular" and "circumferential" will always be understood with respect to the direction of construction of the multilayer body identified by the axis Z.

"Penetration dimension" p means the length of the needles adapted to enter the carbon fibre and/or carbon precursor layers and, in particular, the length of the portion of the needles where the barbs are made.

"Multilayer pre-body", whether needle-punched or not, means an element formed by several layers superimposed during the production process and, in particular, from step a) to step g) of the method according to the present invention, i.e. prior to the subsequent cutting step h) which will generate two distinct multilayer bodies.

Depending on the different height of the multilayer pre-body within the production process, it can be combined with the first and second numeral adjectives. In particular, "first multilayer pre-body of height N" or simply "first multilayer pre-body" can denote the multilayer pre-body at the end of step d), i.e. when it has achieved a height of N, vice versa, "second multilayer pre-body of at least height N+p", or simply "second multilayer pre-body" can denote the multilayer pre-body at the end of step g), i.e. when it has achieved a height of at least N+p.

The present invention, in one or more preferential aspects, can comprise one or more of the characteristics set forth below.

Conveniently, the second multilayer body has a height substantially equal to p.

Advantageously, the second multilayer body together with a supporting element is subjected again to steps b) to h) to form a first multilayer body.

Preferably, the method for making a fibrous preform of carbon and/or fibres of a carbon precursor, according to the present invention, may comprise a step i) of determining the number n of layers of carbon fibres and/or fibres of a carbon precursor according to a pre-set superimposition axis so as to form a multilayer body of pre-set height N.

Conveniently, at least the first and second layers of carbon fibres and/or fibres of a carbon precursor each comprise at least one non-woven sub-layer and at least one woven sub-layer coupled in such a way that the non-woven sub-layer is superimposed on the woven sub-layer.

Preferably, the non-woven sub-layers have an area weight lower than the area weight of the woven sub-layers.

Conveniently, the number of fibres arranged by needle-felting during steps c) and f) and/or parallel to the needle-felting direction is chosen depending on the density of fibres arranged parallel to the superimposition axis, which is intended to be achieved within the fibrous preform.

Preferably, at the needle-felting step, the average number of fibres to be arranged parallel to said superimposition axis per unit area is controlled by adjusting the needle-felting density depending on the dimension and number of the barbs of the needles, as well as the diameter of the fibres and the weight of said at least one fibre layer constituting said first portion of the multilayer body.

Conveniently, the method may comprise a step 1) of shaping the fibrous preform performed by die cutting said first and/or second multilayer body.

According to another aspect, the invention concerns a fibrous preform of a pre-set height of carbon and/or fibres of a carbon precursor, comprising a plurality of superimposed disk-shaped layers of carbon fibres and/or fibres of a carbon precursor; each layer comprising a plurality of carbon fibres and/or fibres of a carbon precursor; each layer having an average density of carbon fibres and/or fibres of a carbon precursor obtained as the ratio of the weight of the same layer to its volume; each layer having an average density variation with respect to the remaining layers of the aforesaid fibrous preform less than or equal to 10%.

Preferably, each layer has an average density variation with respect to the remaining layers of the fibrous preform less than or equal to 5%.

Conveniently, each layer comprises at least one first non-woven sub-layer and at least one second sub-layer which are coupled in such a way that the first non-woven sub-layer is superimposed on the second sub-layer.

Further characteristics and advantages of the invention will become more apparent from the detailed description of some preferred, but not exclusive, embodiments of a method for making a fibrous preform of pre-set height of carbon and/or fibres of a carbon precursor according to the present invention.

### Brief description of the drawings

Such description will be set forth hereinafter with reference to the appended drawings provided for indicative, and therefore non-limiting, purpose only, wherein:
- Figure 1 shows a schematic perspective view of a preform made with the method according to the invention;
- Figure 2 is a sectional view of the preform of figure 1;
- Figure 3 is a schematic view of some steps of the method for making a fibrous preform of pre-set height according to the invention;
- Figure 4 is a schematic view of some steps, following those of figure 3, of the method for making a fibrous preform of pre-set height according to the invention;
- Figure 5 is a schematic view of the arrangement of the fibres as following the interaction of the needles of a needle-felting device with a non-woven sub-layer during a step of making the same preform; and
- Figure 6 is a schematic view of a first embodiment of a needle for needle-felting, with two subsequent enlargements depicting the barbs of the same needle.

### Detailed description of embodiments of the invention

With reference to the accompanying figures, 1 generally denotes a fibrous preform 1 formed by the method according to the present invention.

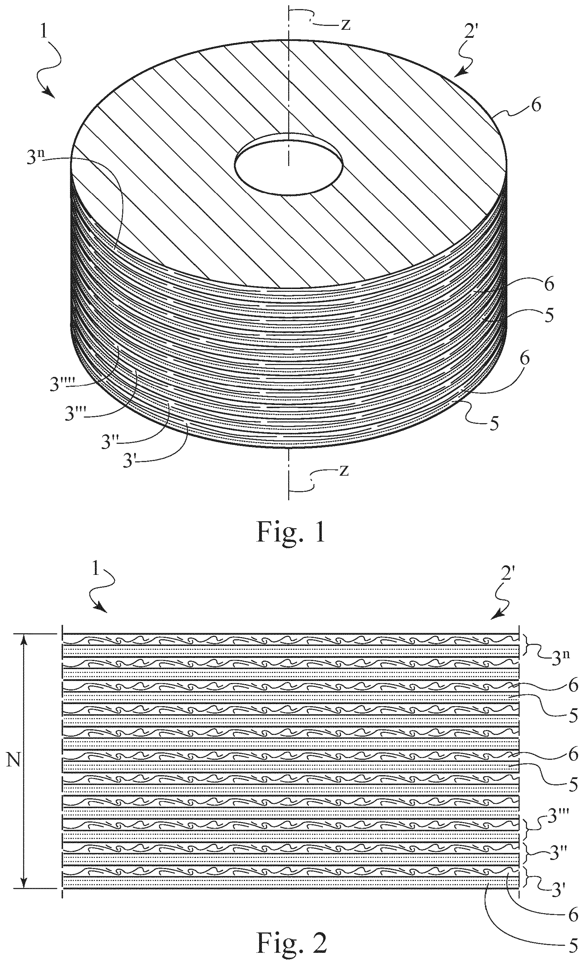

In particular, figures 1 and 2 schematically show a preform 1 made by the method according to the present invention.

The preform 1, at the end of the production method consists of a first multilayer body 2' comprising a plurality of layers 3',3",..,3ⁿ superimposed on each other to form a stack extending along a superimposition axis Z, e.g. vertical as shown in figure 1.

Preferably, each first multilayer body 2' is made of n layers 3',3",....,3ⁿ, preferably identical in shape and dimension.

Each layer 3',3",..,3ⁿ, preferably is disk-shaped.

According to an alternative embodiment of the method better described below, the preform 1 may have, in construction, at least one layer with a different shape and dimension.

The preform 1 of figures 1 and 2 comprises a plurality of layers 3',3",..,3ⁿ, preferably n layers, of carbon fibres or precursor of carbon fibres, these n layers being stacked along the direction identified by the superimposition axis Z. Advantageously, a fibrous preform 1, according to the present invention, can be used when making C/C brake discs as reinforcing structure.

In this case, the fibrous preform 1 is shaped so as to have cylindrical shape, with axis parallel to the superimposition axis Z of the plurality of layers 3',3",..,3ⁿ, of carbon fibres or precursor of carbon fibres.

In particular, the fibrous preform 1 can have a thickness between 10 and 80 mm.

In particular, the fibrous preform 1 may have circular section according to a plane orthogonal to the superimposition axis Z and may have a diameter between 200 and 700 mm.

In particular, the fibrous preform has a (geometric apparent) density between 0.4 and 0.7 g/cm³.

Merely by way of example, at least one part of the carbon fibres (preferably all these fibres) can be derived from oxidised polyacrylonitrile fibres. For example, such fibres are produced by the company SGL Carbon SE under the trade name Panox^{®}.

Preferably, the number of layers 3',3",....,3ⁿ of carbon fibres or precursor of carbon fibres forming a finished fibrous preform 1 of height N is in the range 10-80, advantageously 25-45, e.g. 30-40.

Merely by way of example, along the direction identified by the superimposition axis Z, the fibrous preform 1 may have a thickness between about 40-80 millimetres or more, precisely equal to about 40 millimetres.

Preferably, each layer 3',3",..,3ⁿ composing the fibrous preform 1 is composed of two different coupled sub-layers 5,6. In particular, according to a particularly advantageous embodiment, each layer 3',3",..,3ⁿ is formed by superimposing one or more sub-layers 6 of fibres in non-woven form on one or more sub-layers 5 of fibres in woven form, hereinafter referred to as non-woven sub-layers 6 and woven sub-layers 5, respectively.

The woven sub-layers 5 are sub-layers of material having an ordered arrangement of fibres, wherein the fibres are all arranged substantially on the same plane.

Each woven sub-layer 5 has a weave extension parallel to the surface extension plane of the same sub-layer. In particular, the woven sub-layers 5 may have a twill weave or a plain weave.

The woven sub-layers 5 in a fibrous preform 1 may all have the same type of weave or they may have different types of weave.

According to an alternative embodiment, the sub-layers 5 may be layers comprising long fibres arranged substantially on the same plane and all having substantially the same direction.

The non-woven sub-layers 6 comprise short fibres and may be formed by any technique adapted for the purpose. Preferably, such sub-layers are formed starting from staple fibres.

Alternatively, at least part or all of the non-woven sub-layers 6 may consist of fibres in the form of continuous filaments.

The (woven and non-woven) sub-layers 5,6 of fibres may consist of fibres having the same characteristics or of mixtures of different fibres. The fibres may vary in type and characteristics both within the same sub-layer 5 or 6 and between sub-layer and sub-layer.

Preferably, the non-woven sub-layers 6 have an area weight lower than the area weight of the woven sub-layers 5.

In particular, the non-woven sub-layers 6 each have an area weight between 50 and 500 g/m². The woven sub-layers 5 each have an area weight between 100 and 1000 g/m².

Advantageously, the woven sub-layers 5 of the various layers 3',3",3"'..3" of the same preform 1 may be arranged relative to each other with the weave of the fibres which are respectively rotated by a pre-set angle α around the aforesaid superimposition axis Z.

In other words, the weave of a sub-layer 5 may have an angular offset around the superimposition axis Z of a pre-set angle α, with respect to the subsequent sub-layers in a direction coinciding with or parallel to the superimposition axis Z.

Preferably, the aforesaid angular offset angle is equal to 45°.

Thanks to the aforesaid orientation, it is possible to maximise the distribution of the fibres on the main plane of the preform 1 and thus the final mechanical properties of the manufactured articles (in particular brake discs) incorporating the fibrous preform 1 as a reinforcing structure.

Preferably, in the fibrous preform 1 of pre-set height N of carbon and/or fibres of a carbon precursor, according to the present invention, each layer 3',3",....,3ⁿ has an average density. The average density may be calculated as the ratio of the weight of the same layer to its volume.

In the embodiments shown in the figures, the volume of each layer 3',3",..,3ⁿ is calculated as the plan area of each layer 3',3",..,3ⁿ multiplied by its thickness.

Each layer 3',3",..,3ⁿ has an average density variation with respect to the remaining layers 3',3",..,3ⁿ of the fibrous preform 1 less than or equal to 10%.

In other words, with the method according to the present invention, preforms with all of the layers having a substantially homogeneous density of carbon and/or carbon precursor fibres both arranged in the main plane of the preform and along the superimposition axis Z, can be obtained.

Preferably, each layer 3',3",..,3ⁿ has an average density variation with respect to the remaining layers 3',3",..,3ⁿ of the fibrous preform 1 less than or equal to 10%.

The method according to the invention provides a step (hereinafter referred to as step i) of determining the number n of layers of carbon fibres and/or fibres of a carbon precursor according to a superimposition axis Z so as to form a fibrous preform 1 of height N.

In particular, at this step, depending on the brake disc intended to be produced, the height N or thickness of the fibrous preform 1 to be made is determined and, depending on this height N, the number n required of layers of fibres of carbon and/or fibres of a carbon precursor is obtained.

The thickness of the n layers of carbon fibres and/or fibres of a carbon precursor 1 is assumed to be substantially always the same.

Merely by way of example, starting from the brake disc intended to be made in particular having a given thickness, I determine a blank disc to be machined, from the dimension of the blank disc, knowing that it will be subjected to at least one thermal treatment and at least one densification operation, I determine the height of the fibrous preform 1.

By way of example, in order to make a 43 mm carbon fibrous preform 1, a 50 mm preoxidised carbon preform (in order to switch from preoxidised carbon to carbon, there is a carbonisation thermal treatment with a shrinkage of about 12%) might be needed. Each 3',3",..,3ⁿ layer (depending on its starting density and needle-felting density) could have a thickness in the preform of about 1.5 mm, therefore, in order to make a 43 mm carbon fibrous preform 1, about 33-34 layers 3',3",....,3ⁿ might be needed.

Step i) is carried out at any time, preferably also temporally distant from the production of the fibrous preform 1.

Generally, step i) is implemented prior to steps a)-h) of the method for making a fibrous preform 1 of a pre-set height N of carbon and/or fibres of a carbon precursor described below.

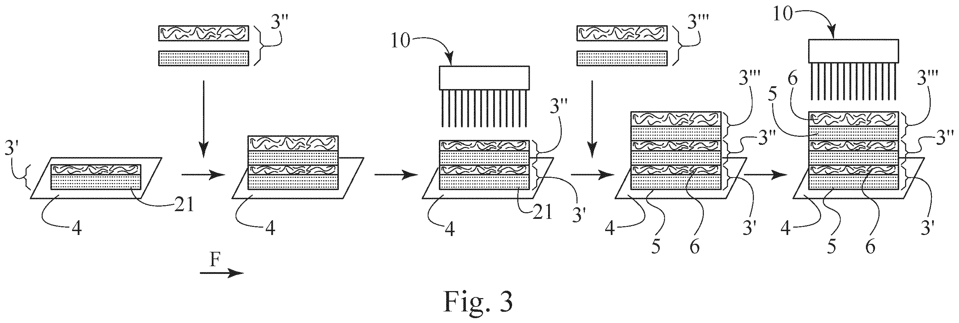

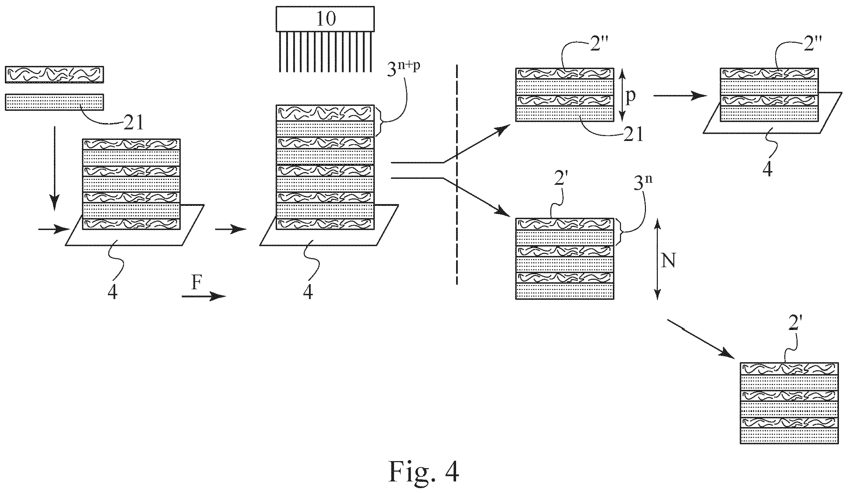

Figures 3 and 4 schematically show some steps of a first embodiment of the method for making a fibrous preform 1 of pre-set height N comprising a number n of layers 3',3",..,3ⁿ of carbon fibres and/or fibres of a carbon precursor, according to the invention.

The production method depicted in figures 3 and 4 thus preferably starts with a step a) of providing at least one first layer 3' of carbon fibres and/or fibres of a carbon precursor to a movable supporting element 4 configured to carry the layers 3',3",..,3^{n,} etc. of carbon fibres and/or fibres of a carbon precursor under the needle-felting head 10.

Preferably, the movable supporting element 4 is formed from the same material of which the layers 3',3"....,3ⁿ, etc. are formed.

According to an embodiment, the supporting element 4 has an area, i.e. a surface extension, greater than the area of each layer 3',3"..,3ⁿ, etc.

Preferably, the dimension of the supporting element parallel to the direction of travel of the layers 3',3",....,3ⁿ, etc. is greater than the diameter of each layer 3',3",....,3ⁿ, etc.

Preferably, the dimension of the supporting element parallel to the direction of travel of the layers 3',3",....,3ⁿ, etc. (denoted by the arrow F in the figure) is greater than at least 10% of the diameter of each layer 3',3",....,3ⁿ, etc.

Step b) is then implemented, in which the first layer 3' of carbon fibres and/or fibres of a carbon precursor is superimposed by at least one second layer 3" of carbon fibres and/or fibres of a carbon precursor 10 according to a pre-set superimposition axis Z.

Preferably, the first 3' and second 3" layers of carbon fibres and/or fibres of a carbon precursor are substantially equal in shape, dimension and material.

The method then continues with a step c) of needle-felting, by means of at least one first needle-felting device 10 with needles, the first 3' and second 3" layers superimposed according to a needle-felting direction substantially parallel to the superimposition axis Z, so as to arrange at least one part of the fibres parallel to the superimposition axis Z.

The expression "arrangement parallel to the construction axis Z'" means a prevalent orientation and is not intended to be limited to arrangements in which the fibres are perfectly parallel to this axis.

In the aforesaid needle-felting step c), it is the first non-woven sub-layer 6 of each layer 3',3" to meet the needles 11 of the first needle-felting device 10 so as to prevent the needles 11 from directly engaging the fibres of the underlying woven sub-layers 5.

The fibres 20 that are to be arranged parallel to the aforesaid superimposition axis Z therefore belong to the sub-layers 6 of fibres in the non-woven form.

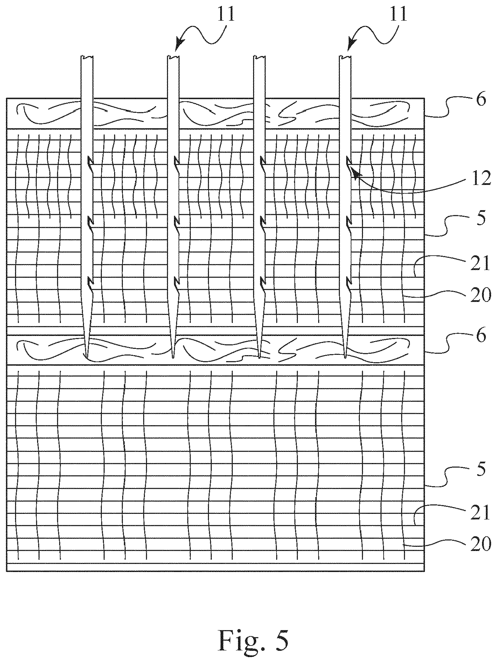

Figure 5 shows schematically the arrangement of the fibres following the interaction of the needles 11 of a needle-felting device 10 with one or more non-woven sub-layers 6 and one or more woven sub-layers 5.

More in detail, 20 denotes the fibres that originate from a non-woven layer and have been displaced into the underlying woven sub-layers 5 by needle-felting.

21 schematically denotes the lying/weaving planes of the fibres forming the woven sub-layers 5.

Advantageously, the sub-layers 5,6 of fibres used to make the fibrous preform 1, in accordance with the method according to the present invention, are not covered by sizing to:
- avoid obstructing the needle-felting (in the presence of resin, the needles 11 of the first needle-felting device 10 would tend to become dirty and there would be a high risk of frequent system blockages); and
- not limit the "mobility" of the fibres 20.

Once step c) has been completed, steps a) and b) are repeated and step c) again, for a pre-set number of times, until a needle-punched multilayer pre-body (2^{N}) is formed with a height equal to the pre-set height N.

For the purposes of the present description, the repetition of steps a, b and c for a pre-set number of times, until a needle-punched multilayer pre-body 2^{N} equal to the pre-set height N is formed, identifies step d).

At this point, a step e) is carried out of superimposing a further layer 3ⁿ⁺¹ of carbon fibres and/or fibres of a carbon precursor to the needle-punched multilayer pre-body 2^{N} of height N according to the superimposition axis Z.

The further layer 3ⁿ⁺¹ of carbon fibres and/or fibres of a laid carbon precursor is, therefore, the layer n+1, where n is the number of layers 3',3",....,3ⁿ superimposed necessary to make a needle-punched preform of height N.

According to a first and preferred embodiment, the further layer 3ⁿ⁺¹ of carbon fibres and/or fibres of a carbon precursor is substantially identical in shape, dimension and material to the n layers 3',3",..,3ⁿ previously laid to make the needle-punched fibrous multilayer pre-body 2^{N} of height N.

A step f) is then implemented of needle-felting, by means of the first needle-felting device 10, the further layer 3ⁿ⁺¹ superimposed, together with the underlying layers, in a needle-felting direction substantially parallel to the superimposition axis Z so as to arrange at least part of the fibres parallel to the superimposition axis Z. The method continues so as to repeat the steps e-f until a needle-punched multilayer pre-body 2^{N+p} of a height at least equal to N+p is formed, wherein p is the maximum penetration dimension of the needles of the needle-felting device 10 in the direction of the superimposition axis Z.

In other words, after the needle-punched layer 3ⁿ⁺¹, another needle-punched layer 3ⁿ⁺² is laid and so on, until the height of the needle-punched multilayer pre-body with a height of at least N+p is formed.

For the purposes of the present description, the repetition of steps e,f a pre-set number of times, until a needle-punched multilayer pre-body 2^{N+p} of a height at least equal to N+p is formed, identifies step g).

At this point, the needle-punched multilayer pre-body 2^{N+p} of height N+p is subjected to a cutting step h) at height N, thus making two multilayer bodies, a first and a second multilayer body, respectively.

The first multilayer body 2' has a height N and is, therefore, formed by n needle-punched layers 3',3",..,3ⁿ, while the second multilayer body 2" has a height substantially equal to p.

In other words, the second multilayer body 2" is formed by a number of layers equal to the maximum penetration dimension p of the needles of the needle-felting device 10 in the direction of the superimposition axis Z.

The first multilayer body 2' is typically subjected to further processing in order to form a brake disc.

By way of example, shaping, carbonisation and graphitisation, described below.

On the other hand, the second multilayer body 2" is repositioned on the supporting element 4 and subjected again to steps a-h in order to form a new first multilayer body 2" of height N and a new second needle-punched multilayer body 2" of height p.

The method can then continue indefinitely.

Advantageously, the method according to the present invention may comprise a shaping step 1) performed by cutting out the sub-layers 5,6 of carbon fibres and/or fibres of a carbon precursor, the single layers or the superimposed and needle-punched layers in order to form a multi-layer body. The shaping step could be implemented with a plotter-guided blade, by die cutting or other methods known to the person skilled in the art and, therefore, not further described.

As already mentioned, the fibres may be of carbon or a carbon precursor (preferably PAN, pitch or rayon).

An alternative embodiment not shown in the figures of the method according to the present invention provides that, in step e) of superimposing a further layer of carbon fibres 3ⁿ⁺¹ and/or fibres of a carbon precursor according to said pre-set superimposition axis Z, the layer 3ⁿ⁺¹ consists of a movable supporting element 4.

This way, at the end of the cutting step h), the second multilayer body 2" will already be combined with a supporting element 4 and ready to be subjected again to steps a) to g) to repeat the production cycle aimed at forming a further first multilayer body (2') of height N. Preferably, the movable supporting element 4 is made of the same material of which the layers 3',3",..,3ⁿ,etc. are formed, which will constitute the fibrous preform 1.

Thanks to the method according to the present invention, it is possible to make a fibrous preform 1 by controlling the three-dimensional distribution of the fibres therein.

In fact, the arrangement of the fibres on the planes defined by the woven sub-layers 5 (parallel to each other) can be controlled by appropriately choosing the type of fabric and is not altered by the needle-felting 10 action thanks to the presence of the non-woven sub-layers 6 which, in this sense, act as a shield against the action of the needles. The arrangement of the fibres orthogonally to the planes defined by the fibre sub-layers 5 can be controlled by adjusting the operating parameters of the needle-felting process and the characteristics of the non-woven sub-layers 6 of each layer 3',3",..3ⁿ, etc. of carbon fibres and/or fibres of a carbon precursor.

Assuming that the main plane of the fibrous preform 1 is defined by a plane parallel to the layers 3',3",..,3ⁿ of carbon fibres and/or fibres of a carbon precursor, thanks to the method it is then possible, according to the present invention, to distribute the fibres in a controlled manner both parallel to such main plane, through the woven sub-layers 5, and orthogonally thereto through the needle-felting action orienting at least part of the fibres of the non-woven sub-layers 6 orthogonally to such plane.

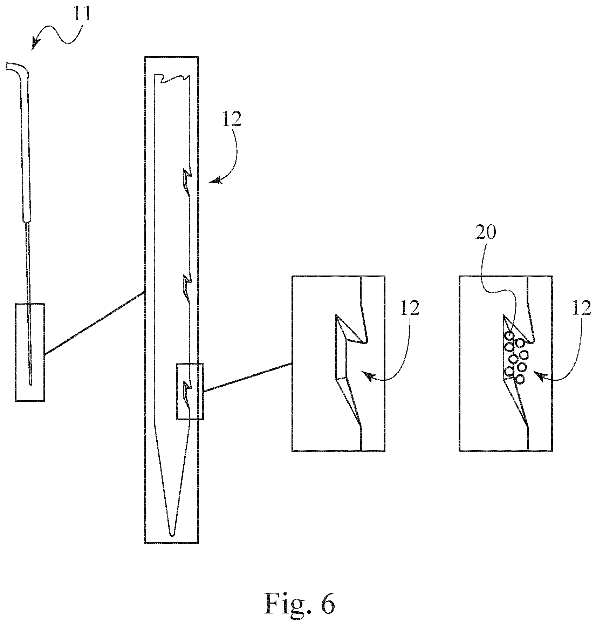

Figure 6 shows schematically a needle 11 of a needle-felting device 10.

The needles 11 of each needle-felting device are preferably all identical to each other and are each equipped with one or more cavities 12 called barbs, adapted to engage one or more fibres 20.

More in detail, the barbs 12 are shaped so as to engage and pull the fibres when the needle 11 penetrates the layer but not to engage and pull the fibres when the needle rises and exits the layer of fibres.

The shape of the barbs is specially designed to carry out this function.

The barbs are formed in the working zone of the needle, i.e. the portion of the needle that penetrates the layer of fibres and can therefore act on the fibres.

Operationally, the fibre 20, which has been displaced in the needle's descending step, remains in the position in which it was placed by the same needle and is not affected by the upward movement of the same needle.

When exiting the layer of fibres, the needle exits without dragging the fibres therewith.

Advantageously, the aforesaid needle-felting steps are performed taking into account both the number and dimension of the barbs 12 and the diameter of the fibre and the weight of the aforesaid sub-layers 6 of non-woven fibres which constitute the upper portions of the different layers 3',3",..,3ⁿ of carbon fibres and/or fibres of a carbon precursor. In other words, the aforesaid needle-felting steps c) and f) are performed in such a way that, throughout the same needle-felting steps, the needles 11 penetrate the layers 3',3",..,3ⁿ of carbon fibres and/or fibres of a carbon precursor and the barbs are filled only with fibres belonging to the non-woven sub-layers 6.

Still in other words, the needle-felting steps c) and f) are performed in such a way that the quantity of fibres available in the sub-layers 6 of non-woven fibres is not lower than (greater than or at most equal to) the quantity of fibres transferable from the needles 11 parallel to the needle-felting direction.

Advantageously, density and orientation of the fibres arranged in said one or more woven sub-layers 5 are chosen depending on the density and orientation of the fibres intended to be in the fibrous preform 1 on planes orthogonal to the superimposition axis Z, i.e. parallel to the main plane of the preform 1 and orthogonal to the thickness of the same preform.

Preferably, in the needle-felting steps c) and f), the average number of fibres to be arranged parallel to the aforesaid superimposition axis Z per unit area is controlled by adjusting the needle-felting density (stitch density) depending on the dimensions and number of barbs 12 of the needles 11 as well as depending on the diameter of the fibres and the area weight of the sub-layers 6 of non-woven fibres which constitute the upper portion of each layer 3',3",..,3ⁿ of carbon fibres and/or fibres of a carbon precursor.

As already mentioned, the sub-layers 6 of non-woven fibres act, as a matter of fact, as a screen and are intended to provide the fibres to be arranged along the superimposition axis Z.

Thanks to the invention, it is possible to have an even fibre density over all the elements that constitute the first multilayer body 2', to the advantage of the mechanical strength homogeneity substantially across the entire height of the preform.

Several changes can be made to the embodiments described in detail, all anyhow remaining within the protection scope of the invention, as defined by the following claims.

## Claims

1. Method for making a fibrous preform (1) of a pre-set height N of carbon and/or fibres of a carbon precursor, comprising a number (n) of layers (3',3",....,3n) of carbon fibres and/or fibres of a carbon precursor, comprising:
- a step a) of providing at least one first layer (3') of carbon fibres and/or fibres of a carbon precursor;
- a step b) of superimposing at least one second layer (3") of carbon fibres and/or fibres of a carbon precursor according to a pre-set superimposition axis (Z);
- a step c) of needle-felting, by at least one needle-felting device (10), said first (3') and said second (3") superimposed layers in a needle-felting direction substantially parallel to said superimposition axis (Z) to arrange at least part of the fibres parallel to the superimposition axis (Z), said needle-felting device (10) having a plurality of needles equipped with a penetration dimension (p);
- a step d) of repeating steps a-c until a needle-punched multilayer pre-body (2^{N}) of pre-set height N is formed;
- a step e) of superimposing a further layer of carbon fibres (3ⁿ⁺¹) and/or fibres of a carbon precursor according to said pre-set superimposition axis (Z);
- a step f) of needle-felting, by at least said needle-felting device (10), said further layer (3ⁿ⁺¹) of carbon and/or fibres of a carbon precursor superimposed together with the underlying layers along a needle-felting direction substantially parallel to said superimposition axis (Z) to arrange at least part of the fibres parallel to the superimposition axis (Z),
- a step g) of repeating steps e, f until forming a needle-punched multilayer pre-body (2^{N+p}) of at least N+p height,
- a step h) of cutting said needle-punched multilayer pre-body (2^{N+p}) of N+p height, at height N, making two multilayer bodies, a first (2') and a second (2") multilayer body, respectively; said first multilayer body having height N.

2. Method for making a fibrous preform (1) of a pre-set height (N) of carbon and/or fibres of a carbon precursor according to claim 1, **characterised in that** said second multilayer body (2") has a height substantially equal to p.

3. Method for making a fibrous preform (1) of carbon and/or fibres of a carbon precursor according to claim 1 or 2, **characterised in that** said second multilayer body (2") together with a supporting element (4) is subjected again to steps b to h) to form a further first multilayer body (2') of height N.

4. Method for making a fibrous preform of carbon and/or fibres of a carbon precursor according to any one of claims 1 to 3, **characterised by** comprising a step i) of determining the number n of layers of carbon fibres and/or fibres of a carbon precursor according to a pre-set superimposition axis (Z) so as to form a first multilayer body (2') of height N.

5. Method for making a fibrous preform (1) of carbon and/or fibres of a carbon precursor according to claim 1, **characterised in that** at least said first (3') and second (3") layers of carbon fibres and/or fibres of a carbon precursor each comprise at least one non-woven sub-layer (6) and at least one woven sub-layer (5) which are coupled so that the non-woven sub-layer (6) is superimposed on the woven sub-layer (5).

6. Method for making a fibrous preform (1) of carbon and/or fibres of a carbon precursor according to claim 5, wherein said non-woven sub-layers (6) have an area weight lower than the area weight of the woven sub-layers (5).

7. Method for making a fibrous preform (1) of carbon and/or fibres of a carbon precursor according to claim 1, wherein the number of fibres (20) arranged by needle-felting during steps c) and f), which are parallel to the needle-felting direction, is selected depending on the density of fibres (20), which is intended to be achieved within the fibrous preform (1), arranged parallel to the superimposition axis (Z).

8. Method for making a fibrous preform of carbon and/or fibres of a carbon precursor according to one or more of the preceding claims, wherein the average number of fibres (20) to be arranged parallel to said superimposition axis per surface unit is controlled during said needle-felting step by adjusting the needle-felting density depending on the size and number of the needle barbs, as well as the diameter of the fibres and the weight of said at least one non-woven sub-layer (6).

9. Method according to one or more of the preceding claims, comprising a step 1) of shaping the fibrous preform (1) performed by die cutting.

10. Fibrous preform (1) of a pre-set height (N) made of carbon and/or fibres of a carbon precursor, comprising a plurality of superimposed disk-shaped layers (3',3",....,3ⁿ ) of carbon fibres and/or fibres of a carbon precursor; each layer (3',3",....,3ⁿ) comprising a plurality of carbon fibres and/or fibres of a carbon precursor; each layer (3',3",....,3ⁿ) having an average density obtained as the ratio of the weight of the same layer to its volume; each layer (3',3",....,3ⁿ) having an average density variation with respect to the remaining layers (3',3",....,3ⁿ) of said fibrous preform (1) less than or equal to 10%.

11. Fibrous preform (1) according to claim 10, **characterised in that** each layer (3',3",....,3ⁿ) has an average density variation with respect to the remaining layers (3',3",....,3ⁿ) of said fibrous preform (1) less than or equal to 5%.

12. Fibrous preform (1) according to claim 10, **characterised in that** each layer (3',3",...,3ⁿ) comprises at least one first non-woven sub-layer (6) and at least one second sub-layer (5) which are coupled so that the first non-woven sub-layer (6) is superimposed on the second sub-layer (5).
